# EUROPEAN PATENT SPECIFICATION

(11) **EP 2 312 390 B1**
(45) Date of publication and mention of the grant of the patent: **16.12.2015**
(21) Application number: 09172884.0
(22) Date of filing: 13.10.2009
(51) Int. Cl.: G03B 21/14

(54) **Light source comprising a digital regulator**
Lichtquelle mit einem digitalen Regler
Source de lumière comprenant un régulateur numérique

(43) Date of publication of application: 20.04.2011
(73) Proprietor: VISITECH AS, 3003 Drammen (NO)
(72) Inventor: Jørgensen, Trond, N-3018, DRAMMEN (NO); Kirkhorn, Endre, N-3031, DRAMMEN (NO)
(74) Representative: Onsagers AS

(56) References cited:
- US-A1- 2002 159 039
- US-A1- 2005 219 467
- US-A1- 2007 153 862
- US-A1- 2008 253 418

## Description

In electronic projection devices like projectors, the light source is a very important component. Important features for such a light source are:
- Light intensity
- Colour temperature (colour specter dispersion)
- Efficiency (amount of visible light emitted vs the power consumption)
- Collimating characteristics (The ability to gather the light in one spot)

In traditional video projectors, UHP- or Xenon lamps have been used because of their excellent light intensity, despite of the fact that they are less than optimal with regards to colour temperature and efficiency. Recent achievements in the development of LED (Light Emitting Diodes) has turned this type of illumination into a suitable light source for small video projectors. Using this technology, one achieve the following advantages:
- Better colour control (the use of RGB LED with a more narrow bandwith)
- The ability to turn the light source on and off much quicker compared to UHP- and Xenon lamps
- Better efficiency (light output power vs supplied power)
- Smaller physical dimensions

When using what is known as micromirror technology as the image generator in a video projector, it has been common to use a lamp together with a spinning RGB colour wheel to illuminate the micromirrors with each primary colour in a certain sequence. The micromirrors are then switched on or off according to the incoming video signal to generate grey scale for each colour, thus achieving the correct colour depth.

If RGB LED is used as a light source, this can replace both the lamp and the colour wheel, given that one can have sufficient control over the light output from each LED when this is active. This requires a significantly advanced regulating circuitry and algorithm, especially when the current in the LEDs are increasing to the tens of Ampères.

US 2006/0279710 refers to a projection device utilizing multiple LEDs as light source and a light modulator to create the images that is to be projected. The emitted light is measured and the LEDs are controlled according to the light measurements.

Some of the challenges involved in using LED as a light source are:
- Voltage- and current regulators for the LEDs are traditionally comprised of control loops with PID-parameters that are built up using analogue discrete electronic components (R,L and C). These regulators are designed to operate on a continuous basis, and not in multiple on/off situations in the ms/µs range.
- When RGB LEDs are being used in projection devices with micro mirrors as the image generator (e.g. DLP), each LED will be active at a maximum of 1/3 of the time of the image rate, minimum a few µs. This means that the current regulators will experience multiple on/off step functions during a short period of time.
- Passive reactive electronic components (L and C) used in traditional analogue regulators have leakage currents during inactive periods (off), making it "forget" the energy value it had during the last active period, thus needing to be recharged again at the next active period (on). These leakage currents can be minimized by isolating the passive components. However, the enabling and disabling of these will cause voltage- and current spikes that are very unfortunate for the behaviour of the regulator, which in turn can cause the regulator to use more time to gain a stable position again when active.
- Such a fluctuation in power will cause a corresponding fluctuation of the light. This is very unfortunate and will generate visible artefacts.

US 2005/219467 A1 describes a light source device, and a driving method for driving a light source device, where the light source includes a plurality of laser light sources that emit laser light.

US 2008/2531418 A1 describes an image projection system having a lamp as light source.

US 2007/0153862 A1, describes a combining a number of optical components to one optical component (array) which is used as a replacement light source for other light sources for example for use in projector applications.

US 2002/0159039 A1 describes use of an analogue regulator for control of luminous flux when a person approaches path of projection rays emitted from a projector based on LCD technology.

The purpose of the invention is to provide digital regulator for controlling at leastone light source for use with projection devices as difined in independent claim 1 that has good colour control and the ability to quickly switch on and off while maintaining a desired light intensity and a method for controlling at least one light source as defined in independent claim 10.

The purpose of the invention is achieved by means of the features of the claims.

According to the invention, a light source for use with a projection device comprises at least one light emitting element arranged to be switched on and off and a digital regulator connected to the light emitting element.

The light-emitting element is an element emitting light at a desired wavelength and intensity, and that can be rapidly switched on and off. The light source can comprise a single light-emitting element with a certain/desired wavelength, or several light emitting elements with the same or different wavelengths. In the following description, LEDs will be used as an example of a light-emitting element. The invention is however not restricted to only this type of light emitting elements.

The digital regulator is a unit controlling the light-emitting element based on predetermined criteria and/or based on received information. The digital regulator can be a PID-regulator, feed-forward or feedback type. The digital regulator can be a programmable unit, and comprise for example a Field Programmable Gate Array (FGPA) or a Digital Signal Processor (DSP) that can be programmed.

In one embodiment, the digital regulator is arranged to store values between each turning on of the light emitting element. The digital regulator may comprise a storage for this purpose. The regulator may then utilize these values in its calculations.

According to the invention, the light source may be connected to a light-modulating device, so that one or more signals from the light-modulating device can be transferred to the digital regulator.

The light source can also comprise a voltage-, current- and/or light power- meter connected to the digital regulator in such a way that the signals from the above mentioned meters can be transferred to the digital regulator and form a basis for controlling the light emitting element(s).

In some applications, the total accumulated light energy is an important factor. In such applications (e.g. illumination of photo-sensitive film), the digital regulator may include means for, for example an algorithm, that monitors the total accumulated light energy delivered by the light source using one of the abovementioned voltage-, current- and/or light power- meters. Then, the regulator can control not only the light amplitude, but also the total amount of light energy delivered from the light source.

In one embodiment the digital regulator comprises an adaptive unit. The adaptive unit can use the values from the current-, power- and/or light power meter from a previous period of which the light emitting element was turned on.

In one embodiment an analogue or digital driver circuit is connected to the light emitting element and the digital regulator. The driver circuit may comprise a charge level preserving device, for example a capacitor.

The digital regulator is in one embodiment arranged to receive a control signal for controlling colour depth. The control signal may for example be received from a projection control unit.

The digital regulator may comprise a measuring device arranged to measure accumulated light and may be arranged to use the measured accumulated light to control total amount of delivered light.

We will now describe the invention in more detail by using design examples with reference to the attached drawings.
Figure 1 shows a block diagram of one embodiment of a light source according to the invention.
Figure 2 shows a more detailed example of a possible embodiment of the invention.

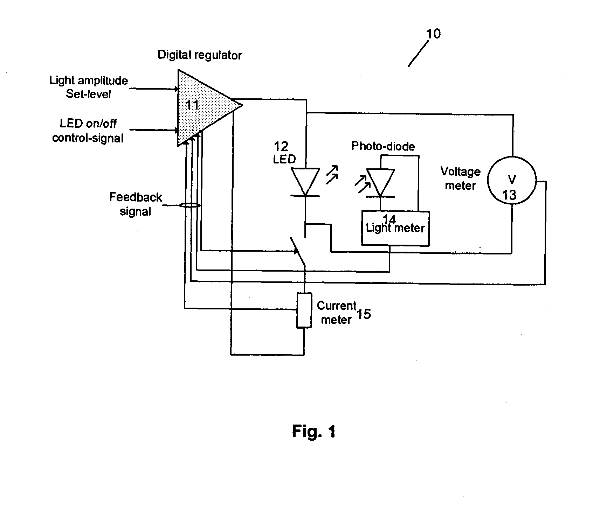

Figure 1 shows a block diagram of a light source 10 according to the invention. The light source comprises at least one light emitting diode (LED) 12 emitting light with a desired wavelength. LED 12 can be a LED with high intensity, intended for (image) projection purposes, such as the type OSTAR (OSRAM) or PhlatLight (Luminus).

A digital regulator 11 is connected to LED 12. The digital regulator 11 comprises a programmable electronic circuit, for example an FPGA or a DSP, containing an algorithm describing the regulating procedure for the LED. A current meter 15 and/or light power meter 14 and/or voltage meter 13 is connected to the digital regulator 11 for feedback readings and control of the power delivered to LED 12. The power delivered to LED 12 can be regulated by a current meter that can be integrated in to the digital regulator or be a separate unit. The possibility of feeding back the readings of both the light, current and power enables the light source to be optimized for use in its entire intensity range. In the lower end of the intensity scale, it will be beneficiary with light-feedback, because the threshold on the current/power characteristics where the light source starts emitting light depends on several parameters such as batch number and temperature. These variations can be mimized/eliminated by regulating exclusively on the basis of the reading from the light power meter. In the upper range of the intensity scale it can be desirable to regulate on the basis of the reading from the current meter, because light power meters are often saturated by high light intensity and because certain applications only require high light output. It is easier to implement current meters, and they are more cost effective than light power meters. Measuring the LED forward voltage may be useful, because this provides information about the temperature of the LED and implicit the possibility of changes in the emitted colour spectrum. This information can then be used to adjust the colour temperature of the projected image.

A switch for power to LED 12 can be connected to, and controlled by, a light modulator circuit (not shown), for instance the micro mirror technology supplied by Texas Instruments (DLP).

When the LED is switched on and off, this configuration will solve the problem with the regulator not remembering the value of the regulating circuit from the last time the light source was active, because these values are stored as digital values in the algorithm of the programmable circuit in the digital regulator. The values are therefore "frozen" until the next time this part of the circuit is active (when the LED is to be switched on again). The result is that one avoids the undesirable fluctuation when a current again runs through the light source. Such an undesirable fluctuation will result in a corresponding undesirable fluctuation of light intensity.

Such a configuration is useful in applications where the control signal from for instance the RGB LED output from a DMD formatter board is being used, where each LED is active at a maximum of 1/3 of the time.

The regulating algorithm in the digital regulator can be designed so that it remembers the settling process from the previous period or periods, and adjust parameters internally in the regulator in such a way that the next period is regulated in optimally, i.e. shortest possible settling time based on the knowledge the regulator has gained, resulting in an adaptive regulator.

Typical applications for the use of the invention are projection devices or devices where this type of image generating technology is used (microscopes, telescopes, rapid prototyping, volumetric displays, meteorology), where it is desirable to replace UHP or xenon lamps and colour wheel with LED. By using LED, the power consumption is minimized, along with the size and requirements for heat dispersion compared to traditional lamp technologies.

Projectors using the DLP technology from Texas Instruments will particularly benefit from the quick response and lower settling time for the light from LED because the micro mirror technology switches images very rapidly (in the micro second range) and by this, the light output from each colour RGB is modulated. If the light from the LED is not as close to constant as possible, this will be seen as a fault in the colour reproduction.

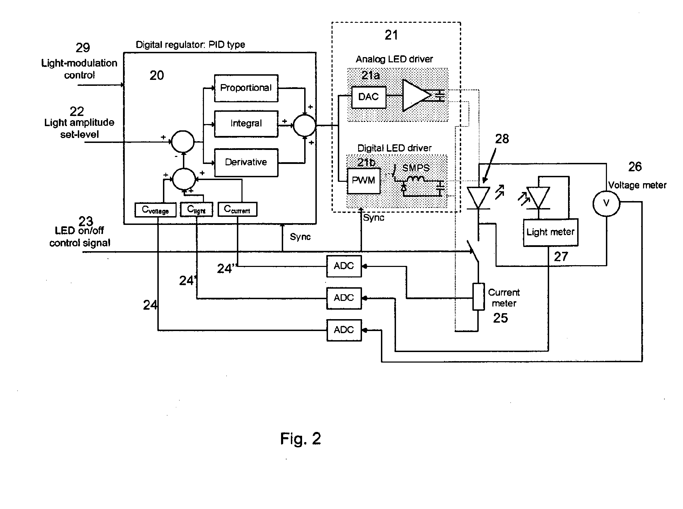

Figure 2 shows a more detailed example of a potential design of the invention. This design can for instance be used as a LED light source in projection applications.

The digital regulator 20 is connected to a LED driver 21 controlling the LED and/or the power going to the LED. The LED driver can be analogue 21a or digital 21b.

The LED driver 21 is connected to one- or multiple LED's 28. The digital regulator 20 will, with this design, have the following input signals from the list below. Other designs can have one or several of these inputs signals, alternatively combined with other input signals:
- Light amplitude set-value 22. This is a value determined by the user, or a circuit adjusting the intensity as a function of for instance the room's ambient light. In certain applications, this is a user adjustable parameter (dimmer).
- LED on/off control-signal 23. This signal, which determines which of the three colors should be illuminated, comes from an RGB sequence-controller in a DMD formatter circuit.
- Feedbacksignals 24, 24', 24". These are digitized values of the readings from the current meter 25, power meter 26 and/or lux meter 27 used to calculate the right amount of power supplied to the LED: an important feature of the lux meter is that this can be fitted with a colour filter, so that variations in the light spectrum (wavelength dispersion) as a variation of the LED temperature can also be picked up by the regulator circuit.
- Light modulation control 29. This signal is received from a circuit controlling the colour depth in the projection unit, typically an FPGA or DSP. The signal provides a feedback so that the amplitude can be adjusted within the on/off (active/passive) period and generate additional colour depth or greyscale for each colour.

Based on these signals, a mathematical calculation is carried out in the regulator 20 (in this case a PID-regulator) and the new value for the power supplied to the LED is sent out as a digital value to the output stage.

If certain applications and environments require a different regulatory structure than a PID-regulator, for instance feed-forward, cascade control or Kalman filtering, this is also easily achievable in the digital regulator. In the same way an adaptive regulation will be feasible in this invention, through learning and adjusting regulatory parameters. This can be done by letting the circuit take care of the feedback information (from the power- and/or light power- and/or voltage meter) from the first or a previous sequence where the light source is active, and use these parameters to adjust the initial regulatory parameters for the next sequence, so that the deviation between the set-values and the actual value is minimized in the succeeding sequences, especially at start-up of each sequence. By doing it this way, any variations in the light source's behaviour and performance as a function of the temperature and/or aging and/or other parameters be detected and adjusted more accurately than what traditional regulatory algorithms can do.

When the LED on/off signal turns passive, i.e. the LED is switched off, the calculations of the new control values stop and the values of the intermediate calculations in the regulator "freezes" until the LED is switched on again. The "freezing" is performed by allowing the digital regulator to remember the values from the last time the LED was active by storing them as digital values. This can only be done with a digital regulator and makes it favourable in applications where it is required to "freeze" a sequence over a certain time period. The regulator does not detect that there has been a passive time period in the meantime, and the calculations continues with the "frozen" values. In a projection application, the on/off sequence is typically 1/60^{th} of a second, where each colour RGB is active one third of this time. From this we get that the LED is off/passive for about 11 msec and on/active for about 5,5 msec. This pulsing represents a series of step functions for a traditional analog regulator and for a digital regulator without the "time-freeze" function, with the challenges this represents in regulator design and time delay before the LED has the correct light amplitude. By freezing time as described, one will avoid this step function because the regulator merely uses the values the regulator had for the intermediate calculations from the last period the LED was active.

This configuration also enables the regulator to allow modulation of the LED within the period of which it is active, either by adjusting the amplitude (set-value) or by pulsing the light rapidly (PWM), by using the information from the light modulation control signal 29. By doing this, additional colour depth or grayscale for each colour can be achieved, compared to what the micro mirrors in the image generating circuit can create.

The output signal from the regulator is sent to the LED-driver 21. This can be designed in several ways. The two main designs are shown in the drawing:
- Analog LED driver 21a. A DAC creates analog signals amplified in an amplifier driving the LED. This solution can be made extremely accurate if the resolution of the DAC is right. It can be compared to a linear power supply, and therefore has very little switching noise.
- Digital LED driver 21b. If the current going to the LED is high (tens of Amperes) a more efficient output stage that generates less heat will be required. This can be designed as a PWM regulated switch mode power supply. It is beneficiary if the PWM- regulation itself is synchronized with the LED on/off control signal, so that you have control of the PWM time period and hence the current in the same period. Another advantage is that the calculation of the PWM-cycle itself can be done digitally in the same circuit the digital regulator is programmed into.

A capacitor can be connected to the output of the LED driver 21 that retains a certain amount of the load also when the LED is passive. This load can be used as start-up power for the LED when the LED turns active again and will also contribute to minimizing the settling time.

### ABBREVIATIONS

- LED: Light Emitting Diode
- RGB: Red-Green-Blue
- PID: Proporsjonal, Integral, Derivator
- DDP: DLP Data Processor
- DMD: Digital Micromirror Device
- DLP: Digital Light Processing
- UHP: Ultra High Pressure
- ADC: Analog to Digital Converter
- DAC: Digital to Analog Converter
- PWM: Pulse Width Modulator
- DSP: Digital Signal Processor
- FPGA: Field Programmable Gate Array

## Claims

1. Digital regulator (11) for controlling at least one LED light source (12) for use with a projection equipment, arranged to be switched on and off multiple times,
**characterized in that** the at least one LED light source (12) is a LED (12), the digital regulator is connected to the LED and to a light power meter (14, 27) and comprises means for monitoring the total accumulated light energy delivered by the LED light source (12) within a period in which the LED is active,
the digital regulator (11) being arranged to modulate the LED within a period of which it is active, by adjusting the amplitude and/or by pulse width modulation of the current to the LED, thus regulating the total amount of light energy delivered from the LED light source within the next period in which it is active by controlling a signal sent to a driver circuit (21) connected to the LED.

2. Digital regulator (11) according to claim 1**,characterized in that** the active period for the LEDs is in the micro second range and that the digital regulator is arranged to store values of output signals which are sent to the driver circuit between each turning on of the LED, and utilizing these values in its calculations for calculating values for the regulator for the next turning on.

3. Digital regulator according to claim 1**,characterized in that** it comprises a current- (15) and/or power- (13) and/or lux (14) meter, the signals from the meters forming a basis for controlling the LED (12) and controlling the total amount of light energy delivered from the light source (12).

4. Digital regulator (11) according to claim 1**,characterized in** being connected to a light modulator and adapted for receiving a light modulation control signal which signal provides information so that the amplitude and/or time period can be adjusted within the on/off period and generate additional colour depth or greyscale for each colour.

5. Digital regulator according to claim 3, **characterized in that** it comprises an adaptive unit using the values from the current- (15), power- (13) and/or lux (14) meter from a previous period of which the LED (12) was turned on.

6. Digital regulator according to claim 1, **characterized in that** the digital regulator is a PID regulator.

7. Digital regulator according to claim 1, **characterized in that** it comprises a Kalman-filter.

8. Digital regulator according to claim 1**, characterized in that** an analogue or digital driver circuit is connected to the LED (12) and the digital regulator.

9. Digital regulator according to claim 8, **characterized in that** the driver circuit comprises a charge level preserving device, for example a capacitor.

10. Method for controlling at least one LED light source (12) for use with a projection equipment, which LED light source comprises at least one LED (12) arranged to be switched on and off multiple times, **characterized by** the steps of :
monitoring the total accumulated light energy delivered by the LED light source within a period of which it is active, and modulating the LED within a period in which the LED light source is active by adjusting the amplitude and/or by pulse width modulation of the current to the LED, thus regulating the total amount of light energy delivered from the LED light source within the next period in which it is active by controlling a signal sent to a driver circuit connected to the LED.

11. Method according to claim 10, **characterized by** the step of: minimizing the deviation between the set-values and the actual value in the succeeding sequences, especially at start-up of each sequence to detect and adjust any variations in the LED light source's behaviour and performance as a function of the temperature and/or aging.

12. Method according to claim 10, **characterized by** the step of: adjusting light intensity based on values received from a user.

## Patentansprüche

1. Digitaler Regler (11) zum Steuern mindestens einer LED-Lichtquelle (12) zur Verwendung mit einer Projektionsausrüstung, die dazu eingerichtet ist, mehrfach ein- und ausgeschaltet zu werden,
**dadurch gekennzeichnet, dass** es sich bei der mindestens einen LED-Lichtquelle (12) um eine LED (12) handelt, der digitale Regler an die LED und an eine Lichtleistungsmessvorrichtung (14, 27) angeschlossen ist und Einrichtungen umfasst, um die von der LED-Lichtquelle (12) innerhalb eines Zeitraums, in dem die LED aktiv ist, abgegebene gesamte akkumulierte Lichtenergie zu überwachen,
wobei der digitale Regler (11) dazu eingerichtet ist, die LED innerhalb eines Zeitraums, in dem sie aktiv ist, zu modulieren, indem die Amplitude und/oder durch Pulsbreitenmodulation der Strom zur LED moduliert wird, wodurch die Gesamtmenge an aus der LED-Lichtquelle innerhalb des nächsten Zeitraums, in dem sie aktiv ist, abgegebenen Lichtenergie geregelt wird, indem ein Signal gesteuert wird, das an eine an die LED angeschlossene Treiberschaltung (21) geschickt wird.

2. Digitaler Regler (11) nach Anspruch 1, **dadurch gekennzeichnet, dass** sich der aktive Zeitraum bei den LEDs im Mikrosekundenbereich befindet, und dass der digitale Regler dazu eingerichtet ist, Werte von Ausgangssignalen zu speichern, die zwischen jedem Einschalten der LED an die Treiberschaltung geschickt werden, und diese Werte bei seinen Berechnungen zu nutzen, um Werte für den Regler für das nächste Einschalten zu berechnen.

3. Digitaler Regler nach Anspruch 1, **dadurch gekennzeichnet, dass** er eine Strom-(15) und/oder Leistungs- (13) und/oder Lux- (14)-Messvorrichtung umfasst, wobei die Signale aus den Messvorrichtungen eine Basis zum Steuern der LED (12) und zum Steuern der aus der Lichtquelle (12) abgegebenen Gesamtmenge an Lichtenergie bilden.

4. Digitaler Regler (11) nach Anspruch 1, **dadurch gekennzeichnet, dass** er an einen Lichtmodulator angeschlossen und dazu angepasst ist, ein Lichtmodulationssteuersignal zu empfangen, welches Information so bereitstellt, dass die Amplitude und/oder der Zeitraum innerhalb des Einschalt-/Ausschaltzeitraums eingestellt werden kann/können und eine zusätzliche Farbtiefe oder Grauskala für jede Farbe generiert.

5. Digitaler Regler nach Anspruch 3, **dadurch gekennzeichnet, dass** er eine adaptive Einheit umfasst, welche die Werte aus der Strom- (15), Leistungs- (13) und/oder Lux- (14)-Messvorrichtung aus einem früheren Zeitraum verwendet, in dem die LED (12) eingeschaltet war.

6. Digitaler Regler nach Anspruch 1, **dadurch gekennzeichnet, dass** es sich bei dem digitalen Regler um einen PID-Regler handelt.

7. Digitaler Regler nach Anspruch 1, **dadurch gekennzeichnet, dass** er ein Kaiman-Filter umfasst.

8. Digitaler Regler nach Anspruch 1, **dadurch gekennzeichnet, dass** eine analoge oder digitale Treiberschaltung an die LED (12) und den digitalen Regler angeschlossen ist.

9. Digitaler Regler nach Anspruch 8, **dadurch gekennzeichnet, dass** die Treiberschaltung eine Ladungspegelaufrechterhaltungsvorrichtung, zum Beispiel einen Kondensator umfasst.

10. Verfahren zum Steuern mindestens einer LED-Lichtquelle (12) zur Verwendung mit einer Projektionsausrüstung, welche LED-Lichtquelle mindestens eine LED (12) umfasst, die dazu eingerichtet ist, mehrfach ein- und ausgeschaltet zu werden, **gekennzeichnet durch** die folgenden Schritte:
Überwachen der von der LED-Lichtquelle innerhalb eines Zeitraums, in dem sie aktiv ist, abgegebenen gesamten akkumulierten Lichtenergie, und Modulieren der LED in einem Zeitraum, in dem die LED-Lichtquelle aktiv ist, indem die Amplitude und/oder durch Pulsbreitenmodulation der Strom zur LED moduliert wird, wodurch die Gesamtmenge an aus der LED-Lichtquelle innerhalb des nächsten Zeitraums, in dem sie aktiv ist, abgegebenen Lichtenergie geregelt wird, indem ein Signal gesteuert wird, das an eine an die LED angeschlossene Treiberschaltung (21) geschickt wird.

11. Verfahren nach Anspruch 10, **gekennzeichnet durch** die folgenden Schritte:
Minimieren der Abweichung zwischen den Sollwerten und dem Istwert in den darauffolgenden Sequenzen, insbesondere beim Anlauf jeder Sequenz, um jegliche Veränderungen bei Verhalten und Leistung der LED-Lichtquelle in Abhängigkeit von der Temperatur und/oder Alterung zu erfassen und anzupassen.

12. Verfahren nach Anspruch 10, **gekennzeichnet durch** den folgenden Schritt:
Einstellen der Lichtstärke auf Grundlage von Werten, die von einem Benutzer her eingehen.

## Revendications

1. Régulateur numérique (11) pour commander au moins une source de lumière à DEL (12) pour une utilisation avec un équipement de projection, agencée pour être activée et désactivée de multiples fois,
**caractérisé en ce que** ladite au moins une source de lumière à DEL (12) est une DEL (12), le régulateur numérique est connecté à la DEL et à un dispositif de mesure de puissance de lumière (14, 27) et comprend des moyens pour surveiller l'énergie lumineuse accumulée totale délivrée par la source de lumière à DEL (12) dans une période pendant laquelle la DEL est active,
le régulateur numérique (11) étant agencé pour moduler la DEL dans une période pendant laquelle elle est active, en ajustant l'amplitude et/ou par la modulation de durée d'impulsion du courant vers la DEL, régulant ainsi la quantité totale d'énergie lumineuse délivrée à partir de la source de lumière à DEL dans la période suivante pendant laquelle elle est active en commandant un signal envoyé à un circuit de commande (21) connecté à la DEL.

2. Régulateur numérique (11) selon la revendication 1, **caractérisé en ce que** la période active pour les DEL est dans la plage des microsecondes et **en ce que** le régulateur numérique est agencé pour mémoriser les valeurs des signaux de sortie qui sont envoyés au circuit de commande entre chaque activation de la DEL, et utiliser ces valeurs dans ses calculs pour calculer des valeurs pour le régulateur pour l'activation suivante.

3. Régulateur numérique selon la revendication 1, **caractérisé en ce qu'**il comprend un dispositif de mesure de courant (15) et/ou de puissance (13) et/ou de lux (14), les signaux provenant des dispositifs de mesure formant une base pour commander la DEL (12) et commander la quantité totale d'énergie lumineuse délivrée à partir de la source de lumière (12).

4. Régulateur numérique (11) selon la revendication 1, **caractérisé en ce qu'**il est connecté à un modulateur de lumière et conçu pour recevoir un signal de commande de modulation de lumière, lequel signal fournit des informations de sorte que l'amplitude et/ou la période de temps puissent être ajustées dans la période d'activation/désactivation et générer une profondeur de couleur ou une échelle de gris supplémentaire pour chaque couleur.

5. Régulateur numérique selon la revendication 3, caractérisé que ce qu'il comprend une unité adaptative utilisant les valeurs provenant du dispositif de mesure de courant (15), de puissance (13) et/ou de lux (14) d'une période précédente pendant laquelle la DEL (12) a été activée.

6. Régulateur numérique selon la revendication 1, **caractérisé en ce que** le régulateur numérique est un régulateur PID.

7. Régulateur numérique selon la revendication 1, **caractérisé en ce qu'**il comprend un filtre de Kalman.

8. Régulateur numérique selon la revendication 1, **caractérisé en ce qu'**un circuit de commande analogique ou numérique est connecté à la DEL (12) et au régulateur numérique.

9. Régulateur numérique selon la revendication 8, **caractérisé en ce que** le circuit de commande comprend un dispositif de préservation de niveau de charge, par exemple un condensateur.

10. Procédé pour commander au moins une source de lumière à DEL (12) pour une utilisation avec un équipement de projection, laquelle source de lumière à DEL comprend au moins une DEL (12) agencée pour être activée et désactivée de multiples fois, **caractérisé par** les étapes : de surveillance de l'énergie lumineuse accumulée totale délivrée par la source de lumière à DEL dans une période pendant laquelle la DEL est active, et de modulation de la DEL dans une période pendant laquelle la source de lumière à DEL est active en ajustant l'amplitude et/ou par la modulation de durée d'impulsion du courant vers la DEL, régulant ainsi la quantité totale d'énergie lumineuse délivrée à partir de la source de lumière à DEL dans la période suivante pendant laquelle elle est active en commandant un signal envoyé à un circuit de commande connecté à la DEL.

11. Procédé selon la revendication 10, **caractérisé par** l'étape: de réduction à un minimum de l'écart entre les valeurs fixées et la valeur réelle dans les séquences suivantes, particulièrement au début de chaque séquence pour détecter et ajuster toutes variations du comportement et de la performance de la source de lumière à DEL en fonction de la température et/ou du vieillissement.

12. Procédé selon la revendication 10, **caractérisé par** l'étape: d'ajustement de l'intensité lumineuse sur la base de valeurs reçues d'un utilisateur.
